# EUROPEAN PATENT APPLICATION

(11) **EP 2 926 925 A2**
(43) Date of publication of application: **07.10.2015**
(21) Application number: 14191012.5
(22) Date of filing: 30.10.2014
(51) Int. Cl.: B22F 3/105, B29C 67/00, C04B 35/64

(54) **Three-dimensional molding equipment and method for manufacturing three-dimensional shaped molding object**

(30) Priority: 04.04.2014 JP 2014077411
(71) Applicant: Matsuura Machinery Corporation, Fukui-city, Fukui (JP)
(72) Inventor: Maeda, Toshio, Fukui City, Fukui (JP); Tomita, Seiichi, Fukui City, Fukui (JP); Takezawa, Yasunori, Fukui City, Fukui (JP); Kato, Toshihiko, Fukui City, Fukui (JP); Amaya, Kouichi, Fukui City, Fukui (JP)
(74) Representative: Hano, Christian

(57) **Abstract**

Three-dimensional molding equipment configured to alternately repeat a laminating process of forming a powder layer by powder supply equipment and a sintering process of radiating a light beam or an electron beam to the powder layer by a light beam or an electron beam scanning equipment (20) and further moving a radiated location with a respective predetermined moving unit set by a central control unit, namely, a computer related to control of a controller, to sinter the powder layer, wherein a plurality of the light beam or electron beam scanning equipments (20) are provided, and a plurality of the light beams or electron beams by the plurality of light beam or electron beam scanning equipments (20) are radiated on the same powder layer, and further the locations radiated by the plurality of the light beam or electron beam scanning equipments (20) are synchronously moved in increments of the moving unit.

## Description

### TECHNICAL FIELD

The present invention relates to a three-dimensional molding equipment and a method for manufacturing a three-dimensional shaped molding object, in which the three-dimensional shaped molding object is manufactured by laminating and sintering powder material.

### BACKGROUND OF THE INVENTION

According to this kind of invention in the prior art, a three-dimensional shaped molding object including a number of sintered layers is manufactured by repeating a process of supplying powder material from a powder supply equipment to form a powder layer and a process of radiating a light beam or an electron beam to a predetermined region of the powder layer formed in the mentioned process to sinter the powder in the predetermined region.

Meanwhile, according to the above prior art, in most cases a galvano scanner device is used to radiate the light beam or electron beam. For example, JP 2005-336547 A discloses an invention in which a light beam or an electron beam emitted from a laser oscillator (20) is reflected on a single galvano scanner device (scanner 22) and further radiated to a powder layer by changing the reflecting direction thereof. In this configuration, a location radiated by the light beam or electron beam can be moved with high speed by the galvano scanner device, and thereby the molding time is shortened.

However, to sinter the powder material, high-energy radiation is required and the light beam or electron beam is needed to be concentrated. Normally, the light beam or electron beam used for sintering is laser of 200W, and the light beam is concentrated until a radiation diameter becomes 0.1 mm or less so as to increase energy. Since the radiation diameter is extremely small as described above, there is the problem that a long time is necessary to manufacture a relatively large molding object even in the case of using the galvano scanner device.

Also, in general, a surface of the three-dimensional molding object is required to have high hardness and density, but in many cases, the inside thereof is allowed to have relatively low hardness and density. Therefore, according to the prior art, to shorten the molding time, energy density is lowered by, for example, upsizing the radiation diameter at the time of sintering the powder layer located on an inner side of the molding object, and the energy density is raised by downsizing the radiation diameter only at the time of sintering the powder layer located on an outer side of the molding object.

However, according to this prior art, control tends to be complicated because changing of the radiation diameter is required and numerous scanning patterns executed by the single galvano scanner device are necessary.

### PRIOR ART DOCUMENTS

Patent Document 1: JP 2005-336547 A

### SUMMARY OF THE INVENTION

### Problems to be Solved by the Invention

The present invention is made in view of the above-described situations, and an object of the present invention is to provide a three-dimensional molding equipment and a method for manufacturing a three-dimensional shaped molding object, which can improve molding efficiency.

To solve the above problems, basic configurations according to the present invention include:
(1) a three-dimensional molding equipment comprising: a powder supply equipment which includes a laminating process to form a powder layer; and a plurality of light beam or electron beam scanning equipments which include a sintering process to radiate a light beam or an electron beam to the powder layer and to move a location radiated by the light beam or the electron beam to sinter with a respective moving unit, wherein the laminated process and the sintering process are alternately repeated and wherein a plurality of light beams or electron beams are radiated on the same powder layer by the plurality of light beam or electron beam scanning equipments and further the respective moving units at locations radiated by the plurality of the light beam or electron beam scanning equipments are synchronized; and
(2) a method for manufacturing a three-dimensional shaped molding object including: a laminating process supplying powder material to form a powder layer; and a sintering process radiating a light beam or an electron beam to the powder layer and moving a location radiated by the light beam or electron beam with a respective moving unit to sinter the powder layer, wherein the laminated process and the sintering process are alternately repeated and wherein a plurality of light beams or electron beams are radiated on a same powder layer and further respective moving units at radiated locations are synchronized in the sintering process.

### EFFECT OF THE INVENTION

Since the present invention is thus configured, sintering is effectively executed, thereby achieving to improve molding efficiency.

### BRIEF DESCRIPTION OF THE DRAWINGS

FIG. 1 is a perspective view schematically illustrating an example of a three-dimensional molding equipment according to the present invention.
FIG. 2 is a perspective view schematically illustrating an example of an embodiment of scanning with a plurality of light beams or electron beams.
FIG. 3 is a perspective view schematically illustrating a different example of an embodiment of scanning with the plurality of light beams or electron beams.
FIG. 4 is a perspective view schematically illustrating another different example of an embodiment of scanning with the plurality of light beams or electron beams.
FIG. 5 is a perspective view schematically illustrating still another different example of an embodiment of scanning with the plurality of light beams or electron beams.
FIG. 6 is a perspective view schematically illustrating still another different example of an embodiment of scanning with the plurality of light beams or electron beams.

### DETAILED DESCRIPTION

According to a basic configuration, a three-dimensional molding equipment including: a powder supply equipment which includes a laminating process to form a powder layer; a plurality of light beam or electron beam scanning equipments which include a sintering process to radiate a light beam or an electron beam to the powder layer to sinter; and a central control unit of a computer which moves a location radiated by the light beam or the electron beam with a respective predetermined moving unit and configures to alternately repeat the laminated process and the sintering process, wherein a plurality of light beams or electron beams are radiated on the same powder layer by the plurality of light beam or electron beam scanning equipments and further the respective moving units at locations radiated by the plurality of the light beam or electron beam scanning equipments are synchronized.

According to this configuration, the plurality of light beams or electron beams is radiated to the same powder layer by the plurality of light beam or electron beam scanning equipments, and further the locations radiated thereby are synchronously moved with the respective moving unit. Therefore, sintering efficiency and molding efficiency may be improved.

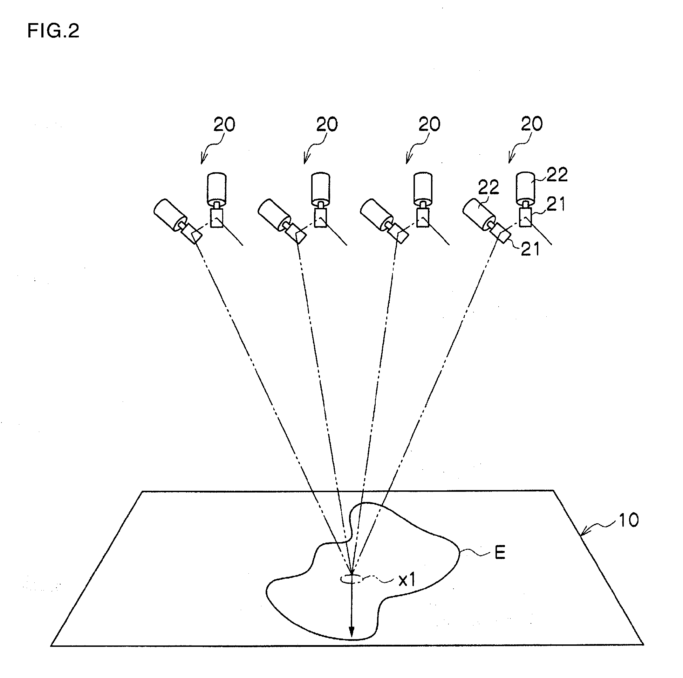

In a first embodiment, the plurality of the light beam or electron beam scanning equipments are controlled by the central control unit such that the locations radiated by the plurality of light beams or electron beams are moved with the situation of concentration and radiation to an appointed position of the powder layer (see FIG. 2).

With this configuration, since the plurality of light beams or electron beams is concentrated to the predetermined position, high-energy sintering is executed in a concentrated portion, thereby achieving to shorten molding time.

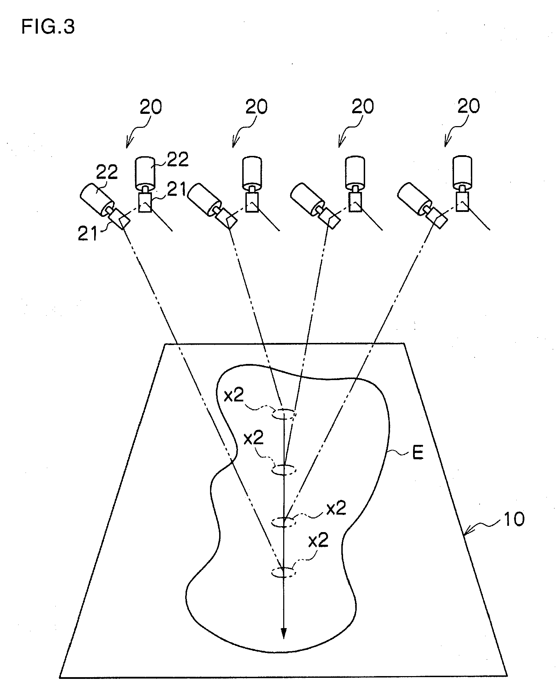

In a second embodiment, the plurality of the light beam or electron beam scanning equipments are controlled by the central control unit such that the locations radiated by the plurality of light beams or electron beams are moved along a preset scanning route with a state aligned in the same line (see FIG. 3).

With this configuration, the plurality of light beams or electron beams sequentially passes a same point. Therefore, sintering is gradually promoted at the same point, and the thermal shock is smaller compared to a case in which high-energy single light beam or electron beam is radiated, and further a highly qualified three-dimensional shaped molding object can be obtained.

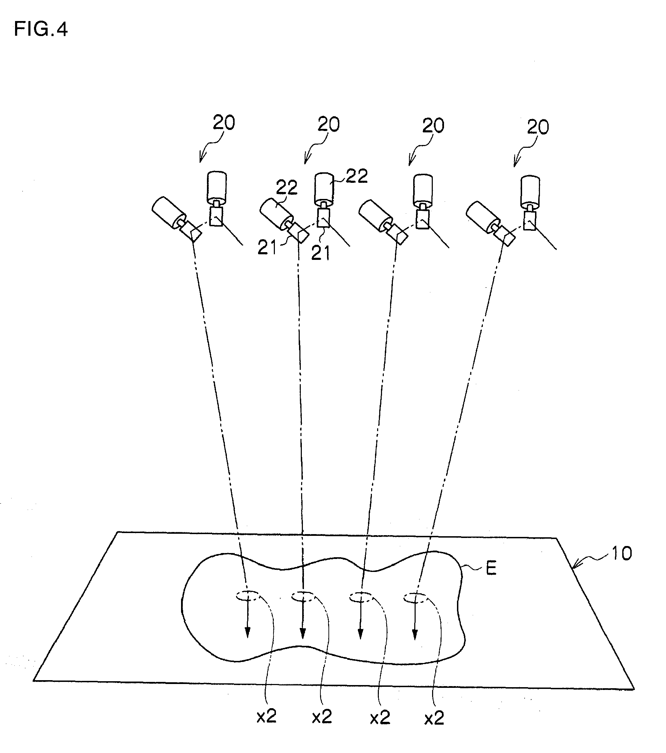

In a third embodiment, the plurality of the light beam or electron beam scanning equipments are controlled by the central control unit such that the locations radiated by the plurality of light beams or electron beams are moved along a preset scanning route with a state aligned in the same line intersecting the preset scanning route (see FIG. 4).

With this configuration, the plurality of light beams or electron beams can be radiated on a relatively wide region on the powder layer at the same time, and further, a molding efficiency can be improved effectively.

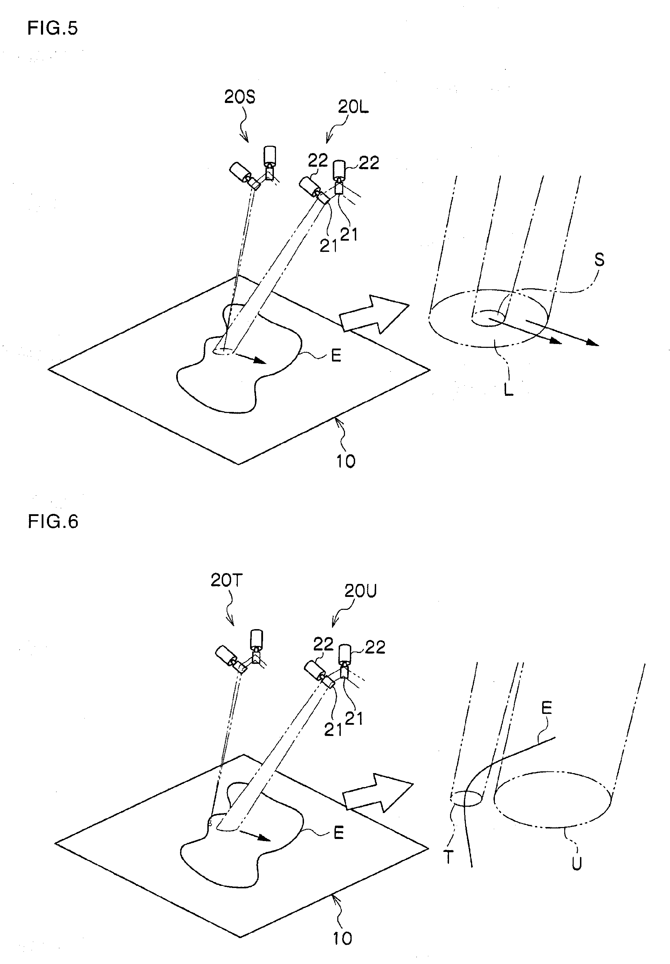

In a fourth embodiment, the plurality of the light beam or electron beam scanning equipments includes: one or a plurality of light beam or electron beam scanning equipments for a large-diameter region, forming one or plurality of large-diameter radiated regions on a surface of the powder layer; and one or a plurality of light beam or electron beam scanning equipments for a small-diameter region, forming one or a plurality of a small-diameter radiated regions having a smaller diameter than the large-diameter radiated region on the surface of the powder layer, and wherein the light beam or electron beam scanning equipment for the large-diameter region and the light beam or electron beam scanning equipment for the small-diameter region are controlled by the central control unit to move along a surface of the powder layer such that the small-diameter radiated region is formed included at a center position of the large-diameter radiated region, and the formation of the small-diameter radiated region is achieved after forming the large-diameter radiated region, keeping the small-diameter radiated region at the center position of the large-diameter radiated region (see FIG. 5).

With this configuration, the surface of the powder layer is first preheated by a portion closer to an outer periphery of the large-diameter radiated region when the large-diameter radiated region and the small-diameter radiated region are moved synchronously. Then, the preheated portion is further heated by the small-diameter radiated region passing the preheated portion.

Accordingly, the surface of the powder layer can be gradually heated by the large-diameter radiated region and the small-diameter radiated region, and furthermore, the thermal shock is smaller compared to a case where high-energy single light beam or electron beam is radiated, so a highly qualified three-dimensional shaped molding object may be obtained.

In a fifth embodiment, the plurality of light beam or electron beam scanning equipments includes: a light beam or electron beam scanning equipment for the outer surface side, controlled to irradiate a region closer to a contour of a region to be molded on the surface of the powder layer; and a light beam or electron beam scanning equipment for the inside, controlled to irradiate a region more inner than the region closer to the contour of the region to be molded, and a radiated amount of the light beam or electron beam scanning equipment for the outer surface side is differentiated from the radiated amount of the light beam or electron beam scanning equipment for the inside (see FIG. 6).

With this configuration, the contour of the region to be molded corresponding to the outer surface of the molding object and the inside of the region to be molded corresponding to the inside of the molding object are sintered in a short time at different density.

In a sixth embodiment, controlling according to the first or second embodiment is adopted in a region closer to the contour of the region to be molded on the surface of the powder layer, and controlling according to the third embodiment is adopted in a region more inner than the mentioned region.

### EXAMPLE

Next, preferred examples including the above-described features will be described in detail basing on the drawings.

### Example 1

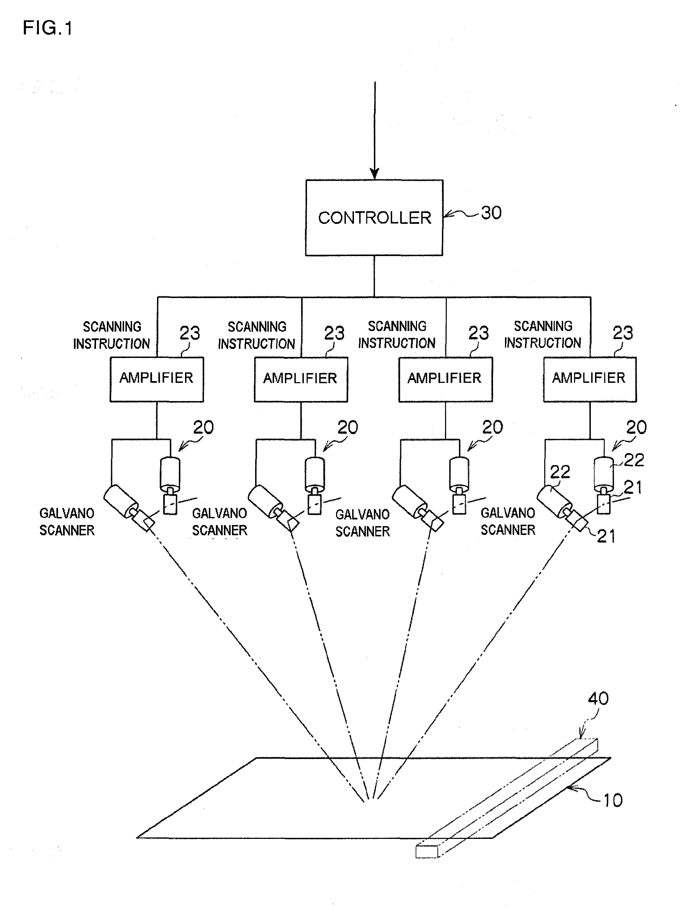

As illustrated in FIG. 1, a three-dimensional molding equipment 1 includes, a molding table 10 that can move vertically, a plurality of light beam or electron beam scanning equipments 20 disposed above the molding table 10, a controller 30 that controls the vertical movement of the molding table 10, operation of the respective light beam or electron beam scanning equipment 20, etc., and a powder supply equipment 40 that supplies powder material on the molding table 10. A three-dimensional shaped molding object is manufactured by alternately repeating a laminating process of supplying the powder material to form a powder layer, and a sintering process of radiating a light beam or an electron beam to the powder layer and further moving a radiated location thereof in increments of a moving unit to sinter the powder layer.

The molding table 10 is a table having an upper surface formed flat, and configured to move vertically by an elevating mechanism not illustrated.

The molding table 10 moves downward by a predetermined amount every time of repeating the processes of forming the powder layer by the later-described powder supply equipment 40 and the light beam or electron beam scanning equipment 20, and partially sintering the powder layer.

Meanwhile, as a different example, the molding table 10 may be fixed not to move vertically, and the powder supply equipment 40 may be configured to move vertically.

The light beam or electron beam scanning equipment 20 is a two-axis galvano scanner device in which the light beam or the electron beam radiated from a light beam oscillator or an electron beam oscillator (not illustrated) is reflected by two reflection mirrors 21, 21 and radiated to the upper surface of the powder layer on the molding table 10, and further a location radiated thereby is moved in a planar direction.

The respective light beam or electron beam scanning equipment 20 make the two reflection mirrors 21, 21 rotate respectively by motors 22, 22 in response to a scanning instruction from the controller 30. When the mirrors are rotated, scanning is executed by the light beam or the electron beam to be radiated to the upper surface of the powder layer in XY directions by setting, as a origin, a reference position on the molding table 10 imaged by an imaging device (not illustrated) such as a CCD camera.

It should be noted that reference sign 23 in FIG. 1 indicates an amplifier that supplies amplified control voltage of the controller 30 to each of the light beam or electron beam scanning equipment 20.

Further, the light beam oscillator or the electron beam oscillator includes, for example, the number of laser beam sources less than the number of the light beam or electron beam scanning equipments 20. A laser beam emitted from the laser light source may be divided by an optical unit such as a prism or a lens such that each light is radiated to the reflection mirror 21 of the light beam or electron beam scanning equipment 20. Meanwhile, a different example of the light beam oscillator or the electron beam oscillator may include a laser beam source for each of the plurality of light beam or electron beam scanning equipments 20.

The controller 30 is a control circuit including a storage unit that stores a processing program, processing data, etc., a CPU, an input/output interface, and so on, and may be formed of a micro-computer, a programmable controller, and other electronic circuits, for example.

The controller 30 receives data input including three-dimensional data (e.g., STL format data, etc.) generated by a CAD/CAM system not illustrated, data related to the radiation diameter of the light beam or electron beam, radiation output of the light beam or electron beam, and so on. Further, the controller 30 executes arithmetic processing based on the processing program which preliminarily stores the above-mentioned data, and controls the light beam oscillator or electron beam oscillator (not illustrated), the elevating mechanism (not illustrated) for the molding table 10, the plurality of light beam or electron beam scanning equipments 20, etc. in accordance with results of the arithmetic processing.

As a unit for changing the radiation diameter of the light beam or electron beam, an aperture mechanism capable of changing the beam diameter may be provided in an optical path of the light beam or electron beam. The aperture mechanism may be provided with a mask plate including a plurality of diaphragm apertures having different diameters, and the plurality of diaphragm apertures may be configured to be selectively moved on the optical path of the light beam or electron beam by moving the mask plate.

Further, the powder supply equipment 40 is a known device that forms a substantially flat powder layer by supplying and squeezing metallic or non-metallic powder material on the flat surface while moving horizontally. The powder supply equipment 40 is configured to move substantially in the horizontal direction above the molding table 10 to form the powder layer on the upper surface of the molding table 10 and laminate additional powder layers over the formed powder layer.

Next, a manufacturing procedure for the three-dimensional shaped molding object by the above three-dimensional molding equipment 1 will be described in detail.

First, the controller 30 actuates the powder supply equipment 40 based on the preliminarily stored processing program and forms the powder layer on the molding table 10. Subsequently, the controller 30 actuates the plurality of light beam or electron beam scanning equipments 20 to radiate the light beam or electron beam to the upper surface of the powder layer.

More specifically, as illustrated in FIG. 2, the controller 30 sets a region to be molded E on the molding table 10 based on the three-dimensional data and the like.

The region to be molded E corresponds to a cross-section of a three-dimensional shaped molding object to be manufactured by the three-dimensional molding equipment 1 taken along a plane parallel to the molding table 10, and the shape of the region to be molded E may be varied by each of the plurality of the powder layers or may be the same in each of the plurality of the powder layers, depending on the shape of the three-dimensional shaped molding object.

Next, as illustrated in FIG. 2, the controller 30 concentrates and radiates the plurality of light beams or electron beams to a predetermined position on the region to be molded E on the same powder layer by the plurality of the light beam or electron beam scanning equipments 20, and also synchronizes movement of the plurality of the light beam or electron beam scanning equipments 20 such that a concentrated portion x1 is moved along a preset molding path. The concentrated portion x1 is a temporary region radiated by the plurality of light beams or electron beams on the powder layer, and has a radiation diameter adjusted by the aperture mechanism.

The molding path is a scanning route for the light beam or electron beam, and is preset based on the three-dimensional data and the like, and stored in a predetermined storage area by the controller 30.

There are two kinds of molding paths: a vector molding path for scanning the region to be molded E along the contour thereof by the light beam or electron beam; and a raster molding path for scanning an inner region of the region to be molded E by the light beam or electron beam so as to hatch the mentioned region. The molding paths are set for the respective powder layers.

More specifically, the raster molding path may be a route that alternately repeats following two scanning routes: a linear scanning route directed from one end to the other end inside the region to be molded E while the light beam or the electron beam is ON state; and a return scanning route directed from the other end of the linear scanning route to an offset position while the light beam or the electron beam is OFF state. Note that the raster molding path may be a different pattern other than the above-described pattern.

When scanning by the light beam or electron beam is executed along the molding path, the region to be molded E on the upper surface of the powder layer is sintered by heat of the light beam or electron beam. After sintering, the controller 30 lowers the molding table 10 by the thickness of the powder layer, and forms a new powder layer by the powder supply equipment 40 on the upper surface of the powder layer including the region to be molded E.

Then, the controller 30 sets a region to be molded E on the upper surface of the new powder layer in the same manner in the process executed for the above-described first powder layer, and concentrates and radiates the plurality of light beams or electron beams to a predetermined position on the region to be molded E on the new powder layer by the plurality of the light beam or electron beam scanning equipments 20, and also synchronizes movement of the plurality of the light beam or electron beam scanning equipments 20 such that the concentrated portion x1 is moved along the above-described molding path. As a result, the region to be molded E on the new powder layer is sintered, and further the sintered portion is incorporated to the sintered portion of the previous powder layer.

Afterwards, a predetermined three-dimensional shaped molding object is manufactured by sequentially repeating the processes of lowering the molding table 10, forming the powder layer by the powder supply equipment 40, and sintering the powder layer by executing scanning with the light beam or electron beam of the plurality of light beam or electron beam scanning equipments 20. Meanwhile, during the above processes, a cutting process is applied to an outer peripheral portion of the sintered layer with high accuracy by using a cutting device not illustrated, if necessary.

Therefore, according to the three-dimensional molding equipment 1 thus configured, the plurality of light beams or electron beams is concentrated and radiated to a predetermined position in the region to be molded E on the same powder layer by the plurality of the light beam or electron beam scanning equipments. As a result, high-energy sintering can be executed at the concentrated portion x1, and furthermore, molding time can be shortened.

Meanwhile, the concentrated portion x1 of the light beams or electron beams of the plurality of the light beam or electron beam scanning equipments 20 may be used for scanning one of or both of the vector molding path and the raster molding path. For example, in the case that the concentrated portion x1 is used for scanning the vector molding path, and a light beam or an electron beam of a single light beam or electron beam scanning equipment not illustrated is used for scanning the raster molding path, a high-density sintered layer can be formed close to the outer peripheral surface of the three-dimensional shaped molding object and a low-density sintered layer can be formed on the inner side thereof.

Next, other examples will be described for a means for synchronizing movement of the radiated locations by the plurality of light beam or electron beam scanning equipments 20 in increments of the moving unit. Note that the following examples are the examples partially modified of the above-described example 1, and therefore, the modified points will be mainly described, omitting repetition of the same detailed description.

### Example 2

As is illustrated in FIG. 3, a plurality of the light beam or electron beam scanning equipments 20 is synchronized such that radiated locations x2 of a plurality of light beams or electron beams are moved along a preset scanning route, being kept aligned in a same line of the preset scanning route.

More specifically, according to this example, a controller 30 controls the plurality of light beam or electron beam scanning equipments 20 such that the plurality of locations x2 radiated by the plurality of light beam or electron beam scanning equipments 20 are aligned on the same line at a predetermined interval. Further, the controller 30 synchronizes movement of the plurality of light beam or electron beam scanning equipments 20 such that the radiated locations x2 are moved making an aligned direction thereof along a molding path.

Each of the radiated locations x2 is a temporary region on a powder layer irradiated with a single light beam or electron beam, and has a radiation diameter adjusted by an aperture mechanism.

Therefore, according to the example illustrated in FIG. 3, the plurality of light beams or electron beams sequentially passes a same point inside a region to be molded E, and gradually sintering is promoted. Therefore, the thermal shock is small compared to a case in which high-energy single light beam or electron beam is radiated, and a highly qualified three-dimensional shaped molding object can be obtained.

### Example 3

As is illustrated in FIG. 4, a plurality of the light beam or electron beam scanning equipments 20 are controlled by the central control unit such that locations x2 radiated by a plurality of light beams or electron beams are moved along a preset scanning route, being kept aligned in a same line that intersects the preset scanning route.

More specifically, according to this example, a controller 30 controls the plurality of the light beam or electron beam scanning equipments 20 such that the plurality of locations x2 radiated by the plurality of the light beam or electron beam scanning equipments 20 are aligned at a predetermined interval on the same line substantially orthogonal to the scanning route along a preset molding path. Further, the controller 30 synchronizes movement of the plurality of the light beam or electron beam scanning equipments 20 such that the plurality of radiated locations x2 are moved along the molding path, being kept aligned as described above.

Therefore, according to the example illustrated in FIG. 4, the plurality of light beams or electron beams can simultaneously radiate to a relatively wide region. As a result, molding efficiency can be effectively improved.

### Example 4

As is illustrated in FIG. 5, a plurality of the light beam or electron beam scanning equipments includes a light beam or an electron beam scanning equipment for a large-diameter region 20L, forming a large-diameter radiated region L on a surface of a powder layer, and a light beam or an electron beam scanning equipment for a small-diameter region 20S, forming a small-diameter radiated region S having a smaller diameter than the large-diameter radiated region L on the surface of the same powder layer.

Each of the light beam or electron beam scanning equipment for the large-diameter region 20L and the light beam or electron beam scanning equipment for the small-diameter region 20S adopts the same configuration as a light beam or electron beam scanning equipment 20 above described, and each of the light beam or electron beam is narrowed down by an aperture mechanism (not illustrated) above described, thereby forming the large-diameter radiated region L having the relatively large diameter and the small-diameter radiated region S having the diameter smaller than the large-diameter radiated region L on a radiated surface.

The controller 30 synchronizes movement in increments of a moving unit of the light beam or electron beam scanning equipment A for the large-diameter region and the light beam or electron beam scanning equipment B for the small-diameter region such that the small-diameter radiated region S is located at a center position included inside the large-diameter radiated region L, and the large-diameter radiated region L and small-diameter radiated region S are moved along a predetermined molding path, being kept this formation.

With this configuration, a heat amount is relatively small in a region between a contour line of the small-diameter radiated region S and a contour line of the large-diameter radiated region L because this region is irradiated by the light beam or electron beam of only one of the scanning equipment A and B, and the heat amount is relatively large in an inner region of the contour line of the small-diameter radiated region S because the light beam or electron beam of one of the scanning equipment A and B and the light beam or electron beam of the other thereof are overlapped in this region.
Additionally, in the case where these two radiated regions S and L are synchronously moved, a same point inside the region to be molded E is initially passed by a portion closer to an outer periphery of the large-diameter radiated region L, and is subsequently passed by the small-diameter radiated region S close to the center portion inside the large-diameter radiated region L. Accordingly, a portion first preheated by the light beam or electron beam of one of the scanning equipment A and B is gradually heated by the light beam or electron beam of one of and the other of the scanning equipment A and B with high heat amount. Therefore, the thermal shock is small compared to a case in which a high-energy single light beam or electron beam is radiated at a time, so a highly qualified three-dimensional shaped molding object can be obtained.

### Example 5

As is illustrated in FIG. 6, the plurality of light beam or electron beam scanning equipments includes a light beam or electron beam scanning equipment for an outer surface side 20T controlled to irradiated a region closer to a contour of a region to be molded E on a surface of a powder layer, and a light beam or electron beam scanning equipment for inside 20U controlled to irradiate a more inner side of the region to be molded E than a radiated location by the light beam or electron beam scanning equipment for the outer surface side 20T, and a radiated amount of the light beam or electron beam scanning equipment for outer surface side 20T is differentiated from the radiated amount of the light beam or electron beam scanning equipment for inside 20U.

More specifically, each of the light beam or electron beam scanning equipments for the outer surface side 20T and the light beam or electron beam scanning equipment for the inside 20U adopts the same configuration as a light beam or electron beam scanning equipment 20 above described, and each of the light beam or electron beam is narrowed down by an aperture mechanism (not illustrated) above described, thereby forming a surface side radiated region T having a relatively small diameter and an inner side radiated region U having a larger diameter than the surface side radiated region T on a radiated surface.

A controller 30 sets the surface side radiated region T closer to a contour including a contour of a region to be molded E by controlling movement of the light beam or electron beam scanning equipment for outer surface side 20T. At the same time, the controller 30 sets the inner side radiated region U more inside the region to be molded E than the surface side radiated region T by controlling movement of the light beam or electron beam scanning equipment for inside 20U.

Additionally, the controller 30 synchronizes movement in increments of a moving unit of the light beam or electron beam scanning equipment for the outer surface side 20T and the light beam or electron beam scanning equipment for the inside 20U, thereby making the surface side radiated region T move along a vector molding path along the contour of the region to be molded E and also making the inner side radiated region U along a raster molding path inside the region to be molded E.

Therefore, according to the example illustrated in FIG. 6, the outer surface side of a three-dimensional shaped molding object can be sintered in a short time at a different density from the inside of the three-dimensional shaped molding object, and further, molding efficiency can be improved and a high-strength three-dimensional shaped molding object can be manufactured.

Meanwhile, according to the above-described example, the region closer to the contour of the region to be molded E is sintered at high density and the inside of the region to be molded E is sintered at low density. However, it is also possible to sinter the region closer to the contour of the region to be molded E at low density and sinter the inside of the region to be molded E at high density by adjusting the respective aperture mechanisms such that the radiation diameters of the light beam or electron beam of both scanning equipment become reverse.

Additionally, according to the above-described example, differentiating the diameters of the light beam or electron beam is adopted as an example of differentiating the radiated amount per unit area. However, there is another example in which an amount of the light beam or electron beam may be differentiated by adjusting output of oscillators of the light beam or electron beam.

Further, there is still another example in which molding efficiency can be more improved by suitably combining the examples illustrated in FIGS. 1 to 6. The sixth embodiment corresponds to a typical case of such a combined example.

### APPLICABILITY OF THE INVENTION

As is obvious from the above described embodiments and examples, the present invention that evidently improves the molding efficiency can industrially exert a great deal of utility value in the fields of manufacturing the three-dimensional molding object.

### LIST OF REFERENCES

10: Molding table
20: Light beam or electron beam scanning equipment
20S: Light beam or electron beam scanning equipment for small-diameter region
20L: Light beam or electron beam scanning equipment for large-diameter region
20T: Light beam or electron beam scanning equipment for outer surface side
20U: Light beam or electron beam scanning equipment for inside
30: Controller
40: Powder supply equipment
E: Region to be molded
S: Small-diameter radiated region
L: Large-diameter radiated region
T: Surface side radiated region
U: Inner side radiated region

## Claims

1. A three-dimensional molding equipment comprising: a powder supply equipment (40) which includes a laminating process to form a powder layer; a plurality of light beam or electron beam scanning equipments (20) which include a sintering process to radiate a light beam or an electron beam to the powder layer to sinter; and to move a radiated location of the light beam or the electron beam to sinter with a respective moving unit, wherein the laminated process and the sintering process are alternately repeated and wherein a plurality of light beams or electron beams are radiated on the same powder layer by the plurality of light beam or electron beam scanning equipments (20) and the respective moving units at locations radiated by the plurality of the light beam or electron beam scanning equipments (20) are synchronized.

2. The three-dimensional molding equipment according to claim 1, wherein the plurality of the light beam or electron beam scanning equipments (20) are controlled by the central control unit such that the locations radiated by the plurality of light beams or electron beams are moved while the plurality of light beams or electron beams are concentrated and radiated to a predetermined position of the powder layer.

3. The three-dimensional molding equipment according to claim 1, wherein the plurality of the light beam or electron beam scanning equipments (20) are controlled by the central control unit such that the radiated locations of the plurality of light beams or electron beams are moved along a preset scanning route with a state aligned in a same line along the preset scanning route.

4. The three-dimensional molding equipment according to claim 1, wherein the plurality of the light beam or electron beam scanning equipments (20) are controlled by the central control unit such that the locations radiated by the plurality of light beams or electron beams are moved along a preset scanning route with a state aligned in the same line that intersects the preset scanning route.

5. The three-dimensional molding equipment according to claim 1, wherein the plurality of the light beam or electron beam scanning equipments (20) comprises: one or a plurality of light beam or electron beam scanning equipments for a large-diameter region (20L), forming one or plurality of large-diameter radiated regions (L) on the surface of the powder layer; and one or a plurality of light beam or electron beam scanning equipments for a small-diameter region (20S), forming one or plurality of a small-diameter radiated regions (S) having a smaller diameter than the large-diameter radiated region (L) on the surface of the powder layer, and
wherein the light beam or electron beam scanning equipment for the large-diameter region (20L) and the light beam or electron beam scanning equipment for the small-diameter region (20S) are controlled by the central control unit to move along the surface of the powder layer such that the small-diameter radiated region (S) is formed included at a center position of the large-diameter radiated region (L), and the formation of the small-diameter radiated region (S) is achieved after forming the large-diameter radiated region (L), keeping the small-diameter radiated region (S) at the center position of the large-diameter radiated region (L).

6. The three-dimensional molding equipment according to claim 1, wherein the plurality of light beam or electron beam scanning equipments (20) comprises: a light beam or electron beam scanning equipment for an outer surface side (20T), controlled to irradiate a region closer to a contour of a region to be molded (E) on the surface of the powder layer; and a light beam or electron beam scanning equipment for an inside (20U), controlled to irradiate a region more inner than the region closer to the contour of the region to be molded (E), and wherein a radiated amount of the light beam or electron beam scanning equipment for the outer surface side (20T) is differentiated from the radiated amount of the light beam or electron beam scanning equipment for the inside (20U).

7. The three-dimensional molding equipment according to claim 1, wherein controlling according to claim 2 or 3 is adopted in a region closer to a contour of a region to be molded (E) on the surface of the powder layer, and controlling according to claim 4 is adopted in a region more inner than the region closer to the contour of the region to be molded (E).

8. A method for manufacturing a three-dimensional shaped molding object comprising: a laminating process supplying powder material to form a powder layer; and a sintering process radiating a light beam or an electron beam to the powder layer and moving a radiated location of the light beam or electron beam with a respective moving unit to sinter the powder layer, wherein the laminating process and the sintering process are alternately repeated,
wherein a plurality of light beams or electron beams are radiated on a same powder layer and further respective moving units at radiated locations are synchronized in the sintering process.
